# FASCICULE DE BREVET EUROPEEN

(11) **EP 2 922 040 B1**
(45) Date de publication et mention de la délivrance du brevet: **25.04.2018**
(21) Numéro de dépôt: 15159567.5
(22) Date de dépôt: 18.03.2015
(51) Int. Cl.: G08G 1/00

(54) **Pilotage de vehicules en convoi**
Steuerung von in Konvoi fahrenden Fahrzeugen
Driving of vehicles in a convoy

(30) Priorité: 21.03.2014 FR 1400684
(43) Date de publication de la demande: 23.09.2015
(73) Titulaire: Thales, 92400 Courbevoie (FR)
(72) Inventeur: Calmettes, Thibaud, 31037 TOULOUSE CEDEX (FR); Monnerat, Michel, 31037 TOULOUSE CEDEX (FR); Serant, Damien, 31037 TOULOUSE CEDEX (FR)
(74) Mandataire: Lucas, Laurent Jacques

(56) Documents cités:
- FR-A1- 2 969 766
- US-A- 5 999 880
- US-A1- 2004 193 372

## Description

### Domaine de l'invention

L'invention concerne le domaine du traitement du signal et en particulier celui du pilotage de véhicules en convoi.

### Etat de la Technique

Le problème technique posé est celui du suivi des positions de véhicules circulant en convois. Le véhicule de tête peut être conduit par un chauffeur. Un ou plusieurs véhicules du convoi peuvent être pilotés automatiquement. Les distances observées entre véhicules sont typiquement de l'ordre de la dizaine de mètres. Le temps de réaction d'un véhicule sur le suivant étant lié au temps de mesure et au temps de communication entre les véhicules, des temps de réaction de 0.1 seconde sont accessibles. A 40m/s (145 km/h), ceci correspond à une distance minimale de 4 mètres entre paires de véhicules (la distance doit être réduite au maximum pour éviter l'apparition d'obstacles ou d'événements non détectables entre deux véhicules, par exemple un animal traversant la chaussée).

Ce problème technique se pose principalement dans un contexte de suivi en routine. Dans des conditions critiques (freinage d'urgence par exemple), la détection des actions du premier chauffeur et les réactions du premier véhicule peuvent se faire au moyen de senseurs adaptés à ces phases critiques (odomètres notamment), des stratégies conservatives pouvant alors être envisagées. Cependant, ces senseurs dédiés n'ont pas une résolution et une stabilité suffisante pour des mesures en routine.

L'état de la technique divulgue très peu de méthodes permettant de résoudre ce problème technique et les résultats ne sont généralement pas satisfaisants. Par exemple, certaines techniques utilisent des systèmes de vision artificielle et/ou de suivi des marquages au sol (par exemple puces RFID insérées dans la chaussée). Ces méthodes requièrent des s'instrumentations lourdes, onéreuses ou ne sont pas flexibles.

Une solution consiste à synchroniser les horloges des différents véhicules, par exemple à leur départ (et/ou à compenser les dérives de ces différentes horloges au fur et à mesure de l'écoulement du temps). La mesure des temps de communication entre les véhicules divisée par la vitesse de la lumière permettrait alors en théorie de déduire les distances intercalaires entre véhicules. Cette approche dans la réalité ne fonctionne pas, étant donné les dérives d'horloge couramment observées (l'erreur de distance avoisine alors la dizaine de mètres).

Il existe un besoin industriel pour des procédés et des méthodes permettant la circulation en sécurité de convois de véhicules, en particulier en dehors des grands axes de circulation. US2004/0193372 divulgue un procédé de gestion d'un convoi comprenant au moins deux véhicules, et comportant la détermination du positionnement relatif des véhicules.

### Résumé de l'invention

L'invention est définie par les revendications. Dans un mode de réalisation, l'invention combine l'utilisation d'un système de positionnement (GPS ou Galileo ou autre) et d'un système de communication inter-véhicules (qui peut être généralement d'un type quelconque).
Dans un développement, la synchronisation d'horloge peut s'effectuer au moyen de l'accès GPS, qui le cas échéant confère un temps d'horloge de référence et de surcroît partagé entre les véhicules. Cette approche élimine les problèmes entraînés par les dérives d'horloge éventuelles.
L'invention permet de mettre en place des stratégies robustes de pilotage automatique (par exemple sans chauffeur) de convois de camion ou de tout autre type de véhicules terrestres (voitures et/ou camions et/ou motos et/ou bus, etc).
L'invention trouvera également avantageusement application pour certaines situations concernant le trafic aérien, par exemple pour des convois de drones miniaturisés destinés à des opérations de logistique et circulant en convoi dans des couloirs aériens déterminés.

Certains modes de réalisation de l'invention peuvent permettre des gains significatifs en matière de logistique et/ou de transport (par exemple pour les industries lourdes de type industrie minière). La gestion des flottes peut être optimisée et la sécurité des transports être renforcée.

Les véhicules (e.g. camions) peuvent être positionnés ou localiser par GPS (ou plus génériquement par système G.N.S.S., terme qui désigne l'ensemble des systèmes de positionnement par satellite e.g. GPS, Galileo et autres). Dans le reste de la description, les termes GPS, Galileo, ou G.N.S.S. sont indifféremment utilisés.

Dans un mode de réalisation, le GPS fonctionne en mode standard ou "absolu" (c'est-à-dire que chaque véhicule du convoi détermine indépendamment des autres son propre positionnement).

Dans un autre mode de réalisation, le GPS fonctionne en mode différentiel (DG.N.S.S.). Ce mode différentiel est aussi appelé "mode relatif" (via la diffusion sur le canal de communication de données de type DGPS), c'est-à-dire que le positionnement d'un véhicule être amélioré du fait de la connaissance du positionnement des autres véhicules, qui servent à améliorer la précision du positionnement.

De manière subsidiaire, il est également possible d'instrumenter les véhicules (i.e. tout ou partie des véhicules du convoi) au moyen de systèmes inertiels (odomètres par exemple), utiles lors de passage du convoi dans des tunnels physiques et/ou des zones dans lesquelles la réception GPS est momentanément interrompue (en situation de circulation urbaine la réception du signal GPS étant empêchée par les bâtiments et ou la végétation, de mauvaises conditions météorologiques, etc)

De manière encore subsidiaire, il est possible de compléter l'instrumentation embarquée pour toute ou partie du convoi. Par exemple, un ou plusieurs véhicules peuvent embarquer un ou plusieurs radars, ou bien encore des systèmes optiques (vision par ordinateur pour la détection de collision, la détection de piétons ou d'obstacles, le suivi des marques blanches sur la chaussée etc.)

Le canal de communication peut lui-même être utilisé en tant que moyen supplémentaire de mesures pour rendre plus robuste l'usage du G.N.S.S., afin d'éliminer les risques d'intégrité (globale ou locale) et d'indisponibilités (tunnels par exemple). En complément, des mesures inertielles peuvent être utilisées.

Entre autres avantages, l'invention permet de remédier au long délai (6 secondes) requis pour l'alerte et les correctifs associés des systèmes d'augmentation S.B.A.S. de type Egnos, délai qui est généralement trop long pour des véhicules circulant sur route à vitesse élevée. Les modes de réalisation décrits permettent des détections robustes et rapides de mouvements relatifs et permettent donc de maintenir des situations conformes (au moins durant ce délai d'alerte)

Certains modes de réalisation de l'invention permettent une amélioration des performances de localisation (via l'apport de mesures différentielles supplémentaires), de l'intégrité (via un moyen de mesure indépendant du G.N.S.S. permettant de mettre en évidence des non-intégrités locales ou globales sur celui-ci), de la disponibilité (lors de passages dans des tunnels par exemple, par le maintien de mesures précises de distance, notamment dans le cadre d'un couplage avec des senseurs inertiels). Ces avantages s'obtiennent sans augmentation significative de la complexité matérielle embarquée, les boîtiers de traitement G.N.S.S. et de communication étant déjà présents de manière courante dans le commerce.

Il est divulgué un procédé, possiblement mis en oeuvre par ordinateur, pour la gestion d'un convoi comprenant au moins deux véhicules, chacun des au moins deux véhicules comprenant des moyens de positionnement par satellite et des moyens de communication de véhicule à véhicule, le procédé comprenant la détermination du positionnement relatif desdits véhicules, ladite détermination comprenant la mesure du temps de propagation d'un signal entre véhicules par les moyens de communication, les horloges associées aux moyens de communication étant synchronisées par l'intermédiaire des moyens de positionnement par satellite en un temps d'horloge de référence.

Le convoi comprend au moins deux véhicules, de tout type (voiture, moto, bus, camion, etc). Le convoi est une entité dynamique: un véhicule peut quitter le convoi, un véhicule peut rejoindre un convoi, deux convois peuvent fusionner (plusieurs véhicules peuvent être considérés comme n'étant qu'un unique véhicule dans une perspective systémique, etc.).

La mesure du temps de propagation correspond au TOA (Time of Arrival). La mesure en soi est effectuée par le véhicule récepteur, au moyen de la valeur de temps déclarée par le véhicule émetteur. La mesure du temps de propagation (d'un signal par exemple) entre deux véhicules donne accès aux informations de distance inter-véhicules (les vitesses relatives des véhicules entre eux étant négligeable par rapport à la vitesse de la lumière). Il est à noter que dans le cas où la convoi comprend plus de deux véhicules, plusieurs temps de propagation peuvent être mesurés (entre deux quelconques véhicules d'un convoi, par exemple entre le 2ème et le 7ème véhicule). Par suite, ces temps peuvent faire l'objet de traitements statistiques (e.g. associé à des intervalles de confiance etc). Des optimisations ou vérifications combinatoires peuvent aussi être effectuées (par exemple les temps de propagation d'un véhicule donné à respectivement tous les autres véhicules du convoi peuvent être mesurés, la mesure d'un véhicule A vers un véhicule B comparés à la mesure d'un véhicule B vers un véhicule A, etc).

Le signal peut être un signal électromagnétique ou lumineux (par exemple un ou plusieurs lasers). Dans certains cas économiques, le signal peut être un signal sonore (le cas échéant la vitesse de propagation du son est connue en fonction de la pression atmosphérique/altitude et la vitesse des véhicules n'est pas négligeable devant la vitesse de propagation du signal). Les spécificités et limitations du mode de réalisation sonore rendent ce mode particulier, mais pas dénué d'intérêt (peu coûteux, il peut en outre compléter d'autres modes de réalisation). De manière générale, un signal de type ondulatoire peut être exploité (faisceau micro-ondes, lumière visible, IR, etc). Les moyens de communication entre véhicules peuvent donc être radio et/ou lumineux e.g. laser et/ou sonore, etc. La redondance des signaux confère de la robustesse au système global.

La synchronisation d'horloges est obtenue par l'intermédiaire du signal satellite. Chaque véhicule possède un temps d'horloge qui lui est propre. Selon certains modes de réalisation, l'invention vise à harmoniser ou ajuster ou synchroniser les différentes horloges des différents véhicules formant le convoi. Le procédé relève donc pleinement d'une combinaison de moyens, agissant en synergie (un résultat de l'un étant réutilisé par l'autre dans une boucle «cybernétique»).

Le "temps d'horloge de référence" désigne le temps après la comparaison et la synchronisation (réelle ou virtuelle) des différentes horloges des différents véhicules. Ce temps d'horloge de référence ("temps d'horloge commun" voire "temps d'horloge synchronisé") sert de référence pour le calcul du ou des temps de propagation du signal entre les véhicules, et sert donc à la détermination du positionnement relatif des véhicules (positions dans l'espace des véhicules les uns par rapport aux autres).

Différentes variantes de synchronisation des horloges sont possibles. Les moyens de positionnement par satellite peuvent calibrer la synchronisation par exemple. Ils peuvent notamment initialiser un temps d'horloge et/ou procéder à des ajustements ou des synchronisations à intervalles réguliers ou irréguliers (périodiques ou intermittents ou opportunistes ou en fonction d'événements de conduite particulier par exemple).

Le "temps d'horloge de référence" peut donc être réajusté de temps à autre (la référence peut changer). Le temps d'horloge de référence en particulier peut servir à l'horodatage du signal transmis entre les véhicules (par exemple par le véhicule émetteur). Une méthode possible de synchronisation peut consister à recaler l'horloge des moyens de communication d'un ou de plusieurs véhicules d'après l'horloge de navigation par satellite (« calibration d'horloge »), pour construire une horloge unique (synchronisation "réelle"). Une autre méthode peut consister à garder des horloges distinctes (les différents boitiers de communication conservent chacun leur horloge par exemple), mais à mesurer l'écart entre les différentes horloges et à transmettre cet écart par l'intermédiaire du canal de communication entre les véhicules (l'écart étant pris en compte ultérieurement dans les calculs de positionnement relatif, synchronisation "virtuelle"). En fait, ces méthodes et leurs nombreuses variantes ont en commun qu'une référence temporelle indépendante et extérieure est injectée dans le calcul de positionnement relatif des véhicules, ce qui est reflété par l'emploi de l'expression «les moyens de communication [sont] synchronisés par l'intermédiaire des moyens de positionnement par satellite».

En pratique, du fait de la programmabilité (ou non) d'une horloge embarquée dans un véhicule, l'horloge considérée peut être, de fait, avancée ou reculée (le retard ou avance pourra être mémorisé). Alternativement, si une horloge ne peut pas être modifiée, son inclusion dans un système plus large permettra de compenser son avance ou son retard dans les calculs ultérieurs.

Le procédé décrit convient à la gestion d'un convoi, de manière générale. Un véhicule peut disposer d'un pilotage (conduite automatique, téléguidage, conduite par un chauffeur, conduite assistée, etc) ou ne pas disposer d'un pilotage proprement dit (le cas échéant, le véhicule mime, imite ou réagit au pilotage d'un ou de plusieurs autres véhicules du convoi).

Dans un développement, le procédé comprend en outre la communication entre les véhicules de l'incertitude associée au temps d'horloge de référence.

L'incertitude du temps de l'horloge associée à un véhicule peut être déterminée ou calculée ou estimée ou quantifiée. Cette incertitude (de mesure du temps d'horloge propre à chaque véhicule) se réfère au temps d'horloge de référence, commun aux véhicules formant le convoi (ou au moins à une majorité d'entre eux). Une dérive peut être déterminée au moyen de sources indépendantes par exemple (mode relatif). Une probabilité de dérive peut aussi être estimée sans le recours à une source tierce (mode absolu). Une dérive ou un écart peut résulter de comparaisons combinant estimations absolues et relatives. Dans un développement, les véhicules (e.g. les moyens de communication et/ou les moyens G.N.S.S.) échangent ces informations concernant l'incertitude de mesure associée à leur horloge. Par exemple, au moins deux véhicules peuvent partager les informations quant à la qualité estimée de la calibration de leur synchronisation. En d'autres termes, un véhicule peut coopérer avec au moins une partie des autres véhicules du convoi en partageant ou en communiquant ou en émettant ou en broadcastant les informations d'incertitude de mesure de temps qui lui sont propres (connaissant le temps de référence tel que défini collectivement).

Dans un développement, le procédé comprend en outre la communication entre les véhicules d'informations relatives aux rapports signal à bruit des mesures issues des moyens de positionnement par satellite.

Dans un développement, le procédé comprend en outre la communication entre les véhicules d'informations relatives au rapport signal à bruit du signal de communication entre les véhicules formant le convoi.

L'erreur de mesure sur le signal de communication sera équivalente à une erreur sur l'horloge.

Dans un développement, le procédé comprend en outre la communication entre les véhicules d'informations relatives aux résidus de mesure sur les signaux reçus des moyens de positionnement par satellite.

Pour un véhicule, un "résidu par satellite" ou un résidu de mesure sur les signaux reçus des moyens de positionnement par satellite (e.g. mesuré pour un couple véhicule/satellite) - correspond à l'écart entre la pseudo distance *mesurée* (i.e. dans la réalité) entre ce véhicule (e.g. son récepteur G.N.S.S.) et le satellite considéré et entre la pseudo distance calculée ou attendue entre la position *finalement estimée* de ce véhicule et le satellite considéré.

Les notions de "rapport signal sur bruit" et de "résidus" sont distinctes. Il est possible de constater des résidus importants en raison par exemple d'un multi-trajet spéculaire sans véritable atténuation du rapport signal à bruit.

Dans un développement, le procédé comprend en outre la détermination d'une localisation absolue d'un ou de plusieurs véhicules formant le convoi.

Outre le positionnement relatif des véhicules les uns par rapport aux autres, le procédé peut prévoir la localisation absolue d'un ou de plusieurs véhicules formant le convoi. Par localisation absolue, il est entendu la situation géographique précise du ou des véhicules considérés.

La localisation absolue peut être obtenue au moyen des différentes coordonnées G.N.S.S. reçues par les véhicules GPS, ainsi qu'au moyen des différents positionnements relatifs des véhicules les uns par rapport aux autres. En d'autres termes, il est possible de corroborer entre elles les différentes informations, qu'elles soient reçues ou qu'elles soient calculées (informations G.N.S.S., position relatives, informations S.B.A.S, etc). Les différentes valeurs peuvent faire l'objet de traitement statistique (tel que calculs de moyenne, écart type, pondération, péréquation, interpolation, etc.)

Dans un développement, la détermination de la localisation absolue utilise avantageusement les résidus satellites tels que précédemment décrits.

Dans un développement, le positionnement relatif des véhicules est corrigé des données reçus par un système d'augmentation régionale des moyens de positionnement par satellite.

Un système G.N.S.S. peut faire l'objet d'une amélioration ou augmentation ou optimisation dite régionale. Par exemple, le système S.B.A.S. correspond à une augmentation régionale d'un système G.N.S.S. D'ordinaire utilisé pour les aéronefs (lors des atterrissages), l'application aux transports terrestre est nouvelle, a fortiori en combinaison. Le système en question par exemple a) prévient d'interruptions de service planifiées et b) communique certains termes correctifs pour améliorer la position lors de pannes ou dysfonctionnements constatés (délai de six secondes)

Dans un développement, les moyens de positionnement par satellite sont des moyens de positionnement par satellite fonctionnant en mode différentiel ou relatif.

Les moyens de positionnement par satellite peuvent fonctionner selon deux modes principaux. Dans un fonctionnement "standard", l'information de localisation est déduite de la réception des signaux satellites: en d'autres termes, la localisation ne dépend que de la réception des signaux satellites et de rien d'autre. Dans un fonctionnement dit « en mode relatif », la localisation est déduite de plusieurs récepteurs, qui peuvent être ou non en mouvement. Selon certains modes de réalisation de l'invention, la localisation est effectuée au moyen de récepteurs qui sont tous en mouvement. Selon d'autres modes de réalisation de l'invention, la localisation est effectuée au moyen de récepteurs pour partie fixes (récepteurs fixes associés à l'infrastructure par exemple) et pour partie en mouvement. Les références fixes peuvent donc être des références non-véhicule (piéton, référence infrastructure tel que pont, mât, bâtiment, station GPS différentielle, etc)

Le fonctionnement en mode différentiel ou relatif des moyens de positionnement par satellite reste malgré tout entièrement optionnel. Si tel mode peut être avantageux en termes de précision, il peut comporter *a contrario* des contre-indications dans certaines situations. Par exemple, lors du passage dans des tunnels physiques, ou des zones de brouillage, les signaux satellites peuvent être interrompus. Par suite, le positionnement relatif ne peut s'effectuer que sur le seul fondement de la mesure des temps de propagation entre les moyens de communication embarqués.

En première approche, de manière simplifiée, théorique et réductrice, il peut être considéré que les différentes combinaisons de moyens sont associées à des ratios performances/coût échelonnés. La mesure du temps de propagation entre les boîtiers de communication nécessite un appareillage peu coûteux et fourni une première approximation rapide des positionnements relatifs. L'ajout d'un système de positionnement par satellite G.N.S.S. permet via la synchronisation des horloges une amélioration de la précision des positionnements relatifs. Cumulativement, le partage et le traitement des résidus de satellites continuent d'améliorer la précision. Toujours cumulativement, le fonctionnement en mode relatif du positionnement satellitaire continu d'accroître les gains en matière de précision. Enfin, la combinaison de tous les moyens (DGPS, traitement des résidus, mesure des temps de propagation entre les boîtiers de communication) aboutit à la meilleure précision possible (toutes en préservant des coûts de matériel raisonnable).

Le procédé tire avantageusement parti de l'utilisation d'une redondance des systèmes de positionnement. En particulier, le traitement des résidus permet d'augmenter significativement la confiance dans la détermination de la configuration du convoi.

La redondance des systèmes de positionnement apporte un avantage supplémentaire, en ce sens qu'elle contribue à la robustesse du système global. Par exemple, si les systèmes embarqués d'un véhicule (par exemple un camion) se mettent à dériver ou à devenir partiellement ou progressivement hors service, le reste du convoi reste en mesure de pallier à ces insuffisances particulières. Entre autres avantages, ladite redondance permet une fiabilité accrue (minimisation de l'impact des brouilleurs, adaptation au zones sans visibilité GPS comme des tunnels).

Il existe une redondance d'informations entre les moyens de communication et les moyens de positionnement différentiels: les deux moyens fournissent un positionnement relatif.

Dans un développement, le procédé comprend en outre la mesure de fréquence des moyens de communication, la mesure de fréquence permettant la détection de virages d'un ou de plusieurs véhicules.

Une mesure Doppler correspond à la dérivée de la fréquence de réception du signal. En d'autres termes, les mesures associées à la propagation du signal par les moyens de communication permet d'effectuer des mesures de type Doppler. Ce type de mesure est adapté à des événements de conduite de type changement de file, sorties de ligne droite ou virages (suivi de courbe de route ou d'autoroutes, intersections urbaines, etc.). Concrètement, du fait du mouvement relatif entre les véhicules formant le convoi (par exemple quand un camion tourne), la fréquence se modifie entre les véhicules. Ces mesures de variation de fréquence avec les moyens de communication permettent d'affiner le suivi du positionnement relatif des véhicules dans les virages.

Dans un développement, le procédé comprend en outre la calibration de la fréquence d'émission des moyens de communication par les moyens de positionnement par satellite.

Les moyens de positionnement par satellite peuvent aussi servir à calibrer ou à servir de référence pour la fréquence d'émission du canal de communication. Cette calibration avantageuse demeure entièrement optionnelle. La calibration de la fréquence d'émission par le G.N.S.S. n'est pas indispensable. En effet, une relative stabilisation de la fréquence d'émission est généralement requise pour connaître précisément un virage instantané, mais il est également possible de considérer la variation de la fréquence de réception, autrement dit la dérivée de la fréquence de réception, soit la dérivée du Doppler, comme métrique de détection de virage et de mesure de la courbure de celui-ci. Cela peut revenir à supposer que la mesure initiale de fréquence reçue était faite en ligne droite, sans avoir de moyen absolu de le vérifier sur la mesure elle-même (mais il est possible de vérifier que le déplacement s'effectue bien en ligne droite par le suivi de la position GPS, ou mieux encore par les senseurs inertiels sur le ou les véhicules).

Les données G.N.S.S. sont avantageusement combinées pour complémenter les mesures du canal de communication. La synchronisation d'horloge permet d'aboutir à des mesures fiables des variations d'écartement entre véhicules, y compris si la vitesse des véhicules change. La gestion des virages peut également bénéficier des apports de données du G.N.S.S., fût-ce de façon moindre en comparaison de la gestion des écartements en ligne droite. Il est à noter qu'un recalage des rayons de courbure de rotation peut être effectué par une manoeuvre consistant à mettre des paires de véhicules au touche à touche (ou quasiment, modulo une distance de sécurité minimale) pendant quelques secondes et ce par exemple toutes les dizaines de kilomètres.

Dans un développement, le procédé comprend en outre la mesure de la puissance reçue par un ou plusieurs des moyens de communication.

La mesure de puissance reçue peut dans certains cas utilement corroborer les estimations de distance pour la détermination du positionnement relatif des véhicules formant le convoi. La puissance reçue décroît en 1/r², r étant la distance entre les véhicules considérés. Si la puissance d'émission est connue et que la puissance reçue est mesurée, il est possible d'en déduire la distance. Dans un environnement de type urbain avec des réflexions et des diffusions électromagnétiques, les effets de l'humidité et d'autres paramètres font que la décroissance est approximativement en 1/r² modulo certains facteurs correctifs. Ce mode de réalisation optionnel est donc avantageux dans certains cas.

Dans un développement, un ou plusieurs véhicules formant le convoi partagent les mêmes moyens de communication et/ou les mêmes moyens de positionnement.

Il possible d'accepter dans le convoi des véhicules ne possédant pas, ou possédant partiellement les appareillages requis par le procédé. En particulier, il est possible d'envisager différentes configurations permettant l'implémentation d'une ou de plusieurs étapes du procédé. Par exemple un ou plusieurs véhicules peuvent partager un même moyen de communication. Des passerelles ou « bridges » peuvent par exemple permettre à un véhicule sous instrumentés de rejoindre le convoi. Par exemple, au moyen d'une connexion fournie par un téléphone portable, des informations GPS, éventuellement dégradées, peuvent être partagées avec les autres véhicules du convoi. De manière similaire, un véhicule dépourvu de moyens de positionnement peut se voir autoriser au sein d'un convoi des lors que des moyens complémentaires sont mis en oeuvre (par exemple un radar de recul équipant le véhicule prédécesseur peut pallier à une insuffisance de moyens de positionnement). De manière générale, un convoi selon l'invention comporte au moins deux véhicules instrumentés selon l'invention, c'est-à-dire comportant chacun des moyens de communication et des moyens de positionnement par satellite fonctionnant en combinaison (e.g. de manière synergétique). De manière idéale, tous les véhicules du convoi sont instrumentés selon l'invention. Dans un mode de réalisation "dégradé", une majorité de véhicules est instrumentée selon l'invention et une minorité de véhicules non-instrumentés est incorporée au convoi. Un convoi peut en effet incorporer des véhicules non-instrumentés selon l'invention ou partiellement instrumentés ou instrumentés différemment. Par exemple, un véhicule conduit par un chauffeur humain peut rejoindre le convoi. Dans ce cas, même en l'absence complète d'instrumentation, le chauffeur ou pilote (y compris télé-pilotage) peut maintenir les distances de sécurité avec ses voisins (successeur et prédécesseur). Un ou plusieurs véhicules peuvent comporter (par exemple uniquement) des moyens de guidage physique (e.g. "perches" de quelques mètres espaçant les véhicules, avec mesures des dérives et asservissements appropriés pour le maintien d'une distance sensiblement constante). Des moyens de guidage électronique (par exemple par mesure laser et avec des asservissements similaires avec le système de conduite) peuvent également permettre à des véhicules tiers de rejoindre le convoi. Des moyens inertiels (par exemple odomètre) peuvent être utilisés. Un véhicule peut aussi ne comporter que l'un ou l'autre entre des moyens de communication et des moyens GPS.

Dans un développement, un véhicule est autorisé à rejoindre ou à quitter le convoi de véhicules.

L'autorisation de rejoindre ou quitter le convoi peut comprendre différentes sous-étapes. Par exemple, dans un premier temps, le véhicule demandeur peut - par exemple et optionnellement - s'authentifier (échange de certificats de sécurité par exemple) auprès d'un ou plusieurs véhicules du convoi, lesquels peuvent voter l'acceptation ou le rejet du véhicule demandeur. Les critères utilisés peuvent comprendre la prise en compte de l'instrumentation disponible dans le véhicule demandeur (en soi ou selon une vision du système global, c'est-à-dire selon l'apport du véhicule demandeur en matière d'instrumentation).

Un véhicule peut dans certaines configurations désigner plusieurs véhicules considérés solidairement. Un véhicule peut donc être une entité mobile, dont le périmètre peut évoluer. Un véhicule peut comprendre plusieurs entités mobiles. En d'autres termes des convois peuvent fusionner ou se scinder. Des phénomènes de coalescence de convois peuvent s'observer, en relation avec les caractéristiques techniques et/ou les performances (de l'instrumentation embarquée par exemple permettant d'effectuer une ou plusieurs étapes du procédé

Dans un développement, une information de localisation absolue est reçue d'une source fixe et authentifiée.

Lors du déplacement du convoi, des informations tierces peuvent venir enrichir la détermination du positionnement absolu du convoi. Afin d'éviter des scénarios d'attaques informatiques (par exemple balise compromise envoyant de fausses informations ou des informations erronées aux différents véhicules, ou tentant de saturer les moyens de communication), un mode de réalisation de l'invention chiffre (optionnellement) la communication d'information, et cumulativement organise l'échange de certificats de sécurité afin de prouver l'authenticité des sources tierces. Par exemple, une balise associée à un pont routier, dont la localisation est très précisément connue, pourra s'authentifier auprès d'un ou de plusieurs véhicules formant le convoi, puis échanger de manière chiffrée des informations de localisation. En particulier, les temps de propagation individuels des différents véhicules à ladite balise pourront être mesurés, et par suite venir corroborer ou affiner la localisation et/ou le positionnement relatif des véhicules formant le convoi. La communication peut être unilatérale (par exemple, la balise fixe ne fait qu'émettre sa localisation) mais elle peut aussi être bilatérale (la balise peut être sollicitée, peut échanger des clefs de sécurité, peut délivrer des informations avec différents niveaux de précision selon les niveaux d'autorisation des véhicules émettant les requêtes, etc).

Dans un développement, le procédé comprend comprenant l'exclusion d'un satellite défaillant pour la détermination du positionnement d'un véhicule et/ou pour l'estimation du temps d'horloge de référence.

Dans un développement, un satellite peut se révéler défaillant ou défectueux (de manière constante ou permanente, ou par exemple sur un intervalle de temps donné). Cette défaillance peut être déclarée (par un système extérieur, et donc reçue par un ou plusieurs véhicules formant le convoi) ou déterminée en propre par un ou plusieurs véhicules (par exemple à l'issu d'un vote ou en fonction de seuils de confiance ou de critères quantitatifs, etc). Par suite, les moyens de positionnement embarqués peuvent ignorer le satellite défaillant. Les moyens de positionnement peuvent être programmables ou non-programmables: l'exclusion d'un satellite de la constellation peut être effectuée à différents niveaux. Le satellite peut être exclu par tout ou partie des récepteurs G.N.S.S. embarqués. Si un récepteur n'est pas programmable, le satellite défaillant sera pris en compte pour la détermination de la localisation du véhicule embarquant le récepteur mais ce véhicule peut ne pas participer à l'estimation du temps d'horloge synchronisé. Le convoi peut décider "collectivement" (vote majoritaire ou autres schémas), en fonction des données reçues (données G.N.S.S. brutes et/ou résidus et/ou rapport signal sur bruit) et des temps de propagation qu'un satellite a un problème et de l'exclure pour un temps de toute estimation d'horloge dans l'ensemble du convoi. Ce processus d'exclusion par exemple peut se fonder sur l'observation qu'un satellite particulier donne un résidu fort par rapport à la solution obtenue avec tous les autres satellites et les signaux de communication, et sur tous les récepteurs du convoi. Comparé à un système d'augmentation régionale de type S.B.A.S., cette élimination rapide d'un satellite perturbé ajoute la prise en compte de la mesure de communication, se traite dans des délais de détection sensiblement plus courts que les 6 secondes du S.B.A.S. (i.e. compatible avec le pilotage du convoi), et permet aussi de prendre en compte la possibilité que le satellite perturbé ne soit pas un satellite mais en fait un leurre au sol. A intervalles réguliers, le signal issu dudit satellite peut être testé par un ou plusieurs véhicules de manière à continuer d'ignorer le satellite ou afin de le prendre en compte à nouveau.

Il est divulgué un système comprenant des moyens pour mettre en oeuvre l'une quelconque des étapes du procédé. En particulier, le système peut utiliser des moyens de positionnement par satellite, des moyens de communication, des moyens de calcul, de stockage d'informations, d'affichage d'informations. Les moyens de communication avantageusement utilisent une modulation UWB. La modulation UWB présente l'avantage de permettre une bonne qualité de mesure de temps de propagation. Les moyens de communication en particulier peuvent être de type GSM (2G), UMTS (3G), LTE (4G), CDMA2000, Tetra, UWB, Zigbee, Bluetooth, DSRC, Wifi, Wimax.

Une, plusieurs ou toutes les étapes du procédé peuvent être mises en oeuvre par ordinateur. Un produit programme d'ordinateur comprenant des instructions de code permet d'effectuer l'une quelconque des étapes du procédé lorsque le programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 illustre une portion de convoi selon l'invention;
La figure 2 illustre un exemple d'équipement embarqué par un véhicule du convoi et instrumenté selon l'invention;
La figure 3 montre une vue générale et schématique des entrées/sorties de la fonction navigateur embarquée dans un véhicule du convoi selon l'invention.
La figure 4 souligne un aspect de l'invention relatif à la correction ou la pondération apportée par l'analyse des résidus.

### Description détaillée de l'invention

Un «véhicule» selon l'invention peut être un camion (de tout type, e.g. une camionnette ou un poids-lourd, etc), un robot mobile (y compris aéronef), une moto, une voiture.

Un « convoi » peut être composé de véhicules hétérogènes ou bien composé de véhicules étant sensiblement de même modèle. Une application privilégiée de l'invention concerne les convois de camions (train de poids-lourds). Un convoi peut évoluer dans le temps: des véhicules peuvent rejoindre ou quitter un convoi formé. Un « convoi » est donc un objet dynamique, dont la composition n'est pas figée. Plusieurs convois peuvent fusionner ensemble. Un convoi peut se scinder en plusieurs nouveaux convois. L'invention trouve avantageusement application dans ces situations de "coalescence" logistique.

Un système G.N.S.S. (Global Navigation Satellite System) recouvre tous les systèmes de positionnement par satellite, par exemple Glonass (Russe), GPS (Américain), Galileo (Européen), etc. Les expressions « GPS » ou « Galileo » ou « GPS et Galileo » sont indifféremment utilisées et renvoient à tout ou partie du système génériquement appelé G.N.S.S.

L'utilisation d'un système G.N.S.S. est problématique pour le pilotage de convois, ou plus généralement pour des applications de conduite automatique. Un système G.N.S.S. est typiquement affecté par des limitations liées au nombre de satellites de la constellation en vue ou en fonctionnement correct. Le problème technique est en effet pour partie celui de l'intégrité du signal. Cette intégrité peut être amoindrie en raisons de causes diverses: saut d'horloge, satellites non disponibles, interférences locales naturelles de type tunnel routier par exemple, présence de brouilleur («*jammer*» en anglais) qui bien que généralement interdits pourraient perturber une localisation, etc).

Un récepteur GPS ou Galileo effectue diverses opérations, notamment une opération de corrélation consistant à faire coïncider dans le temps le code reçu depuis le satellite et le code produit en interne par le récepteur. Le signal GPS ou Galileo permet en outre de mesurer un écart entre les ondulations de la porteuse du signal reçu (la phase du signal reçu) et les ondulations de la porteuse du signal généré en interne par le récepteur (la face du signal généré en interne). La mesure par écart de phase confère une grande précision, inférieure à 20 cm (par accumulation de mesure de code et de phase). Certains récepteurs peuvent utiliser une augmentation régionale ou locale, par exemple pour les phases d'approche et d'atterrissage dans les applications de navigation aérienne. Ces récepteurs utilisent en plus des signaux GPS Galileo une source indépendante informations pour garantir les performances du service.

Les mesures de communication ne sont pas utilisées dans les rares documents de l'état de la technique disponibles. Le GPS n'est pas utilisé en milieu urbain. Sur les autoroutes, le ciel est généralement ouvert. En milieu urbain, la végétation ou les bâtiments peuvent gêner la réception GPS ou Galileo, et ceci est d'autant plus vrai que la précision doit être importante.

Les systèmes de renforcement GPS de type S.B.A.S. (Satellite Based Augmentation System) sont - entre autres aspects - des systèmes qui peuvent alerter les utilisateurs ou les systèmes de manière préventive des interruptions planifiées ou de défaillances de systèmes G.N.S.S. Ces alertes peuvent comprendre des informations de corrections à apporter aux signaux. Le délai de ce type de système est d'environ six secondes (« time to alert »), ce qui dans une situation de circulation en convoi constitue un délai (beaucoup) trop long. De fait, les moyens de transport terrestre n'utilisent pas le système S.B.A.S.

Dans un mode de réalisation, un GPS dans un mode standard est utilisé. Dans un autre mode de réalisation, le GPS est utilisé en mode différentiel (« D.G.N.S.S. »). La comparaison des temps de parcours permet de positionner les récepteurs entre eux. En général le mode différentiel est utilisé avec au moins un récepteur fixe (dont la position est très précisément connue, par exemple monté sur un mât pour des applications en agriculture). L'instrumentation des axes routiers avec une multitude de tels récepteurs GPS fixes est onéreuse. Envisageable pour des axes autoroutiers, cette instrumentation est irréaliste pour le réseau secondaire. Le mode différentiel selon l'invention s'effectue majoritairement entre récepteurs qui sont mobiles, embarqués dans les véhicules. L'utilisation de récepteurs fixes n'est néanmoins pas exclue.

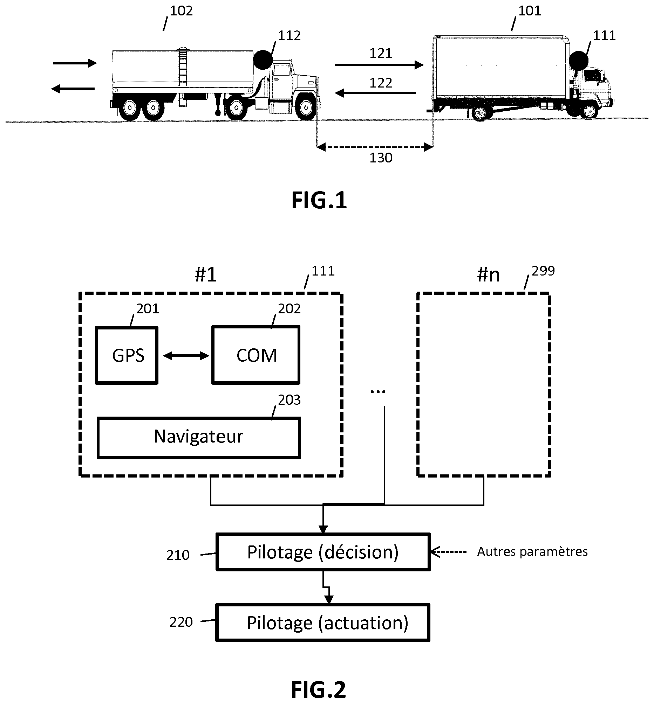

La figure 1 illustre une portion de convoi selon l'invention. La figure 1 montre deux camions 101 de tête et successeur 102 séparés par une distance 130.

Un véhicule communique avec les autres (tous les autres, ou avec une partie quelconque d'entre eux, ou avec un ou plusieurs de ses successeurs et/ou prédécesseurs ou bien encore avec un autre quelconque du convoi).

Les temps de propagation entre les véhicules sont mesurés et comparés (en fait entre les antennes, la géométrie des véhicules, i.e. avant et arrière étant connus). Pour ce faire, un temps d'horloge commun est requis. Des horloges atomiques ne peuvent pas de façon réaliste être embarquées dans chaque véhicule pour des raisons de coût. Les horloges de chaque véhicule doivent être et demeurer (relativement) synchronisées: il est donc besoin d'une horloge de référence.

La synchronisation au départ des véhicules serait insuffisante dans la plupart des cas (en raison des dérives des horloges, outre que cela empêcherait en plus à un nouveau véhicule de rejoindre un convoi déjà formé). Il est donc besoin d'une horloge de référence et cette horloge est définie via le système de positionnement, qui fournit un temps d'horloge commun. En outre, selon l'invention, une méthode est divulguée pour maintenir et améliorer la précision de ce temps d'horloge commun (les notions de temps et de localisation sont liées, modulo les informations de déplacement accessibles via des moyens de mesure, par exemple inertiels).

La géométrie des véhicules (avant, arrière, dimensions latérales, hauteur) est connue pour chaque véhicule (elle est prédéfinie), ainsi que la géométrie entre l'antenne de communication et l'antenne GPS. Ces informations implicites sont intégrées dans les calculs. Ces informations ne sont pas essentielles (dans la mesure où des correctifs peuvent être apportés, par exemple au moyen de modules externes ou indépendants).

Dans un mode de réalisation, le convoi comprenant plusieurs véhicules ne comprend aucun chauffeur (i.e. tous les véhicules sont à conduite automatique. Dans un autre mode de réalisation, un ou plusieurs véhicules est conduit par un chauffeur humain. Par exemple, seul le véhicule de tête est piloté manuellement (et/ou de manière semi-automatique). Dans le cadre de tels convois, le premier camion avec un chauffeur peut être en charge de la conduite proprement dite, avec notamment le choix des directions aux intersections, le choix de la file sur une route à plusieurs voies, et la détection des obstacles imprévus (éventuellement assisté par des moyens automatiques de type radar). selon ce mode de réalisation, le premier camion peut transmettre via un canal de communication dédié les informations de route aux camions suivants, et ainsi de suite, les camions suivants se chargeant de reproduire de manière automatique les actions du premier et de maintenir une position relative prédéterminée.

La figure 2 illustre un exemple d'équipement embarqué par au moins un véhicule du convoi. Le système de communication entre les camions est utilisé comme moyen de mesure supplémentaire, en complément du G.N.S.S. (et éventuellement des centrales d'inertie). Ces mesures présentent l'avantage d'être complètement indépendantes du G.N.S.S. (donc non soumises aux mêmes événements), d'être instantanées, d'être entre véhicules successifs, et de ne pas demander d'équipements supplémentaires (le canal de communication inter-véhicules étant de toutes façons nécessaire pour les situations critique (freinage d'urgence par exemple)).

Pour ceci, deux éléments de mesure sont considérés : la mesure de TOA (Time Of Arrival) pour le maintien de la distance, et la mesure de FOA (Frequency Of Arrival) pour le suivi en courbe. L'invention privilégie pour ce canal de communication l'utilisation d'une modulation OFDM de type 4G mobile pour sa bonne qualité de mesures TOA/FOA sur des communications courtes en ligne de vue directe, et moyennant une définition standardisée d'une porteuse de synchronisation.

Le TOA concerne la distance (inter-véhicules). Dans le cas des virages, des moyens visuels (reconnaissance d'images ou autres) sont possibles mais il est avantageux d'exploiter le canal de communication, c'est-à-dire sans complexifier l'exploitation du canal/signaux GPS. Dans le cas d'un virage, le doppler change (FOA) puisque la position relative des véhicules change (si les véhicules sont en immobilité relative, le doppler est nul).

Des mesures de TOA et/ou FOA sont reçues/émises, par un ou plusieurs véhicules. Des traitements statistiques peuvent être effectués (moyennes, écarts-type, par couple de véhicules, ou selon tout autre schéma, par exemple entre véhicules numéroté 3 et 17 et 18, etc).

Hormis le véhicule de tête 101 qui peut optionnellement contenir d'autres équipements, un véhicule selon l'invention (par exemple 102) comprend un récepteur G.N.S.S. 201 (optionnellement avec la capacité de fournir des mesures de position à un ou plusieurs autres véhicules, que ceux-ci puissent réaliser des localisations différentielles), en interaction avec un récepteur/émetteur de communication 202 (par exemple de type OFDM 4G mobile ou UWB) capable de dater et mesurer précisément la fréquence des signaux reçus. Optionnellement, un ou plusieurs véhicules possèdent en outre un ou plusieurs senseurs inertiels et/ou odomètres (compteurs à cycle ou autre) pour faciliter le suivi de trajectoire sur le court et moyen terme. Toujours optionnellement, des moyens radars et/ou optique (vision robotique, infrarouge etc) complémentent l'instrumentation embarquée.

Dans un mode de réalisation, un ou plusieurs récepteurs G.N.S.S. peuvent être compatibles avec la réception de données d'intégrité par réseau sol ou par S.B.A.S. afin de limiter dans le temps le fonctionnement en mode dégradé sur canal de communication. Il est par exemple envisageable de considérer que si le canal de communication 202 a détecté un problème sur un satellite G.N.S.S. et que ce problème n'a pas été reporté par le système S.B.A.S. (s'il est en visibilité) au bout de 30 secondes (5 fois le *Time To Alert* nominal, et notablement plus que la durée d'un multi-trajet en environnement non urbain), il y a une incohérence et il est préférable de mettre en place des stratégies de pilotage (arrêt, ralentissement, éloignement relatif des camions...) en attendant une consolidation de la connaissance de la situation.

Les camions communiquent généralement entre successifs (d'autre schémas de communication seront divulgués ci-après), la position des antennes de communication sur chaque camion devant être connue de manière précise. La communication entre les camions peut s'effectuer par tout moyen connu (e.g. C.B., Wifi, Bluetooth, 3G, 4G, LTE, Wimax, UWB). Les communications sont de préférence locales, i.e. de point à point, mais les communications avec des temps de latence plus importants ne sont pas nécessairement exclus (par exemple DVB).

Des sources d'informations de positionnement - autres que le système de positionnement GPS ou Galileo - peuvent avantageusement être utilisées. Ces informations peuvent être utilisées en combinaison (e.g. pour enrichir les algorithmes) ou de manière complémentaire ou additionnelle ou juxtaposée (pour réduire les incertitudes, améliorer par corrélation les déterminations de position, etc). Ces informations peuvent être optionnelles dans certains cas (la navigation peut se passer de telles informations) ou être requises lorsqu'intégrées plus profondément dans la détermination algorithmique de la position. Dans certains cas, ces informations peuvent aussi se substituer (i.e. remplacer) les informations GPS, en tout ou partie. Ces sources peuvent par exemple être des informations issues des stations de base GSM accédées à mesure du déplacement du convoi, d'autres systèmes satellitaires, de données issus de réseaux Bluetooth, 2G, Edge, 3G, 4G, LTE ou 5G, UWB, de données issus de réseaux Wifi traversés par le convoi, de données extraites de la chaussée (par exemple puces RFID ou selon d'autres technologies sans contact, insérées dans des capteurs ou senseurs présents dans la chaussée), des informations ou confirmations fournies par des aéronefs ou drones, de données envoyées par les véhicules circulant sur les voies opposées ou adjacentes, issues d'autres méthodes de triangulations, etc. Différents niveaux de confiance (e.g. intervalle statistique d'incertitude ou niveaux quantifiés de crédibilité des sources, etc) peuvent être associés aux différentes sources d'informations. Différentes méthodes (e.g. péréquation et/ou pondération et/ou interpolation, optionnellement et par exemple prenant en compte les centrales d'inertie, etc) peuvent alors être implémentées pour déterminer une localisation résultante.

Sur les signaux de communication reçus, le boîtier de communication dans chaque camion effectue une mesure de TOA/FOA. La mesure de TOA va principalement servir au maintien de la distance, la mesure FOA à l'évaluation d'une vitesse de virage dans le cas d'une courbe ou d'un changement de voie.

Ces mesures sont ensuite comparées avec les mesures G.N.S.S. absolues et différentielles pour lever une éventuelle incohérence, puis ces mesures sont combinées avec les mesures G.N.S.S. validées pour obtenir une solution de localisation hybridée. Les informations de résidus recueillies à l'issue des étapes de vérification d'intégrité et de combinaison sont stockées dans des messages à destination des autres camions, l'idée étant que si un camion a détecté localement une incohérence sur un satellite, il peut être intéressant de conseiller aux autres véhicules du convoi de vérifier plus particulièrement ce satellite et dans la mesure du possible éviter d'en faire usage.

Les contributions du canal ou module de communication 202 à la localisation sont donc multiples. Le canal ou module ou boitier de communication 202 transmet entre les véhicules (ou une partie des véhicules) des données D.G.N.S.S. (différentielles), des données d'intégrité G.N.S.S. évaluées par chaque véhicule, (éventuellement recombinables en intégrité globale dans le cas où les observations de chaque véhicule concordent vers une source d'erreur globale par exemple de type panne G.N.S.S.), et des données de résidus de localisation différentielles (qui peuvent servir notamment - dans le cas où l'intégrité G.N.S.S. est consolidée - à recaler les synchronisations des références temporelles des boîtiers de communication). La localisation, la disponibilité et l'intégrité sont améliorées (en partie à cause des contributions issues des mesures différentielles TOA/FOA supplémentaires).

L'ensemble des informations issues des navigateurs 111 à 299 (ainsi que d'autres paramètres éventuellement reçus de système de navigation extérieurs) est pris en compte de manière à fournir une aide à la décision pour le pilotage du convoi. Le pilotage 210 proprement dit peut correspondre à des règles concernant un ou plusieurs véhicules et choisies dans la liste comprenant un arrêt sur bande d'urgence et/ou diminution de vitesse et/ou accélération et/ou alerte sonore et/ou alerte lumineuse et/ou restitution des commandes de pilotage au conducteur humain, etc.

Le système d'aide au pilotage 210 est en interaction avec un ensemble d'actuateurs, c'est-à-dire de moyens mécaniques d'action pour la conduite. Les actuateurs peuvent fournir des informations en retour et modifier les décisions en matière de pilotage (si par exemple une direction d'un véhicule est défaillante, les décisions de pilotage peuvent s'en trouver modifiées).

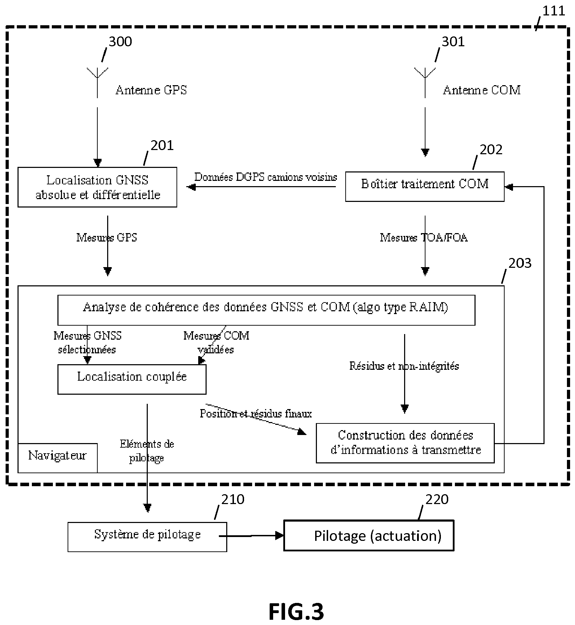

La figure 3 montre une vue générale et schématique des entrées/sorties de la fonction navigateur embarquée dans un véhicule du convoi. La réception et le traitement des signaux pour un véhicule sont présentés.

La synchronisation des horloges sur le canal de communication correspond à un aspect de l'invention. Cette synchronisation est requise pour effectuer les mesures TOA/FOA, et est pourtant nominalement effectuée grâce à la calibration par un récepteur G.N.S.S., ce qui crée une dépendance des mesures TOA/FOA vis-à-vis de la localisation G.N.S.S. et nuit à l'intégrité. Selon une implémentation de l'invention, la synchronisation des horloges du canal de communication est avantageusement pilotée par le bloc de navigateur et non directement par le récepteur G.N.S.S.. Cette approche permet d'intégrer dans le pilotage de synchronisation toutes les informations d'intégrité qui ont pu être levées par ailleurs (transmises par communication ou évaluées localement), les éléments apportés par les senseurs inertiels, et de mettre en oeuvre les lissages et contournements nécessaires aux erreurs de mesure (par exemple en ne mettant en oeuvre de resynchronisation qu'aux périodes aux suffisamment de satellites G.N.S.S. de qualité sont visibles, et en ajustant les stratégies globales de vitesse et de séparation entre véhicules en cas de longue période sans resynchronisation.

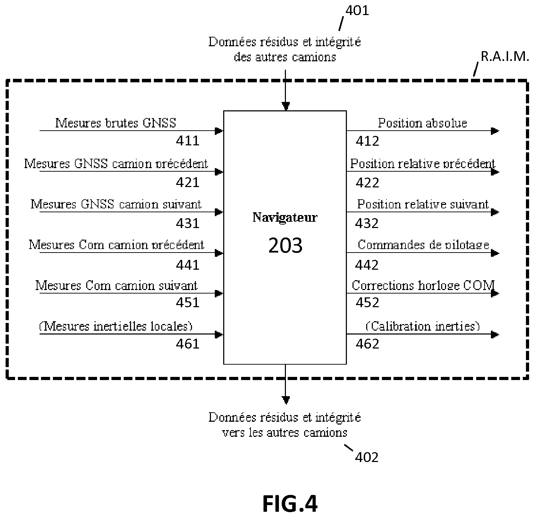

La figure 4 souligne un aspect de l'invention relatif à la correction ou la pondération apportée par l'analyse des résidus. Chaque véhicule effectue une correction sur le temps GPS. Non seulement il effectue cette correction mais chaque véhicule déclare la correction prévue et la communique à l'ensemble des autres véhicules. Il est donc possible de détecter les canaux défectueux, ou les biais systématiques. Les véhicules peuvent prendre en compte les résidus.

La figure 4 souligne un aspect de l'invention relatif à la correction ou la pondération par fonction R.A.I.M. (Ranging or Receiver Autonomous Integrity Monitoring). De la même manière que le positionnement relatif des véhicules du convoi peut être déterminé plus précisément au moyen des calculs de résidus, une fonction communément disponible sur les récepteurs GPS peut être mise avantageusement à contribution. Il existe différents types de récepteurs GPS ou Galileo. Ces récepteurs peuvent être instrumentés d'une fonction de contrôle d'intégrité. La technique appelée RAIM (Ranging Autonomous Integrity Monitoring) permet aux récepteurs de détecter de façon autonome l'apparition d'un dysfonctionnement ou d'une dégradation de performance d'un satellite défectueux. Les récepteurs les plus simples sont conçus pour recevoir une seule fréquence en provenance des satellites GPS (signal L1 C/A) ou Galileo (signal E5a ou L1). Ils sont en général équipés d'une dizaine de canaux de réception pour acquérir l'ensemble des satellites GPS ou Galileo en visibilité. Les récepteurs à plus complexe peuvent recevoir deux fréquences (bi-fréquence) en provenance de chaque satellite des deux constellations (récepteurs combinés GPS/Galileo). Dans la mesure où l'utilisation combinée des constellations indépendantes GPS et Galileo renforce la fiabilité du positionnement, de tels récepteurs combinés utilisant la technique RAIM permettent des localisations précises.

Les déterminations des positions relatives des véhicules dans le convoi peuvent être améliorées par l'utilisation de cette fonction RAIM disponible dans les récepteurs, ou plus généralement par l'implémentation d'algorithmes de type R.A.I.M. Ce type d'algorithme permet de vérifier l'état des signaux reçus des constellations de satellites. Il signale la possibilité d'une erreur de position inacceptable quand une incohérence dans l'ensemble de mesures de distances transmises par les satellites est détectée. Cette fonction est indisponible lorsque le nombre de satellites reçus est insuffisant ou leur géométrie défavorable. Selon la fonction R.A.I.M. un récepteur peut donc déterminer de façon autonome l'apparition d'un dysfonctionnement ou de dégradation de performance d'un satellite par exemple. Le RAIM est une technique ou une fonction ou une méthode utilisée par certains récepteurs pour déterminer si les informations reçues le satellite sont erronées, par l'observation de six autres satellites. Les informations douteuses peuvent être rejetées par le récepteur et ne sont généralement pas utilisés pour le calcul d'une position. Le RAIM est une technique de calcul, qui peut être implémentée dans le calculateur du récepteur par exemple, pour détecter l'apparition d'une dégradation de la précision de la mesure de distance en provenance d'un satellite parmi tous les satellites visibles. Il s'appuie sur la disponibilité d'un excédent de mesure en provenance des satellites du fait que les constellations GPS Galileo offre de façon quasi permanente un nombre de satellites en visibilité supérieur à 4. Le récepteur peut établir plusieurs solutions de positionnement, selon plusieurs combinaisons de satellites comprenant quatre satellites ou plus. Du fait de la comparaison des résultats fournis (notamment par comparaison des signaux entre les différents satellites et par analyse de la dispersion), les algorithmes RAIM peuvent identifier la présence de mesure de distance défectueuse en provenance d'un satellite. Il est ainsi possible de détecter des erreurs en provenance d'un satellite aussi bien que des effets atmosphériques ou d'autres interférences locales affectant la réception des signaux d'un satellite. De manière simplifiée, cinq satellites permet de détecter une anomalie et six satellites permettent d'isoler un satellite fautif (à fin de l'exclure du calcul de positionnement).

De fait, chaque paramètre d'entrée dans le navigateur peut être surveillé. De manière générique, il est déterminé l'écart entre la mesure (e.g. la position) réellement observée (i.e. telle que déterminée par l'ensemble des autres véhicules) et la mesure simulée (i.e. déterminée par le véhicule en fonction de ses propres systèmes embarqués tels que odomètres, systèmes inertiels, etc).

Dans un mode de réalisation, le R.A.I.M. est partagé entre les véhicules. Les résidus sont broadcastés aux autres véhicules. Les informations de résidus et d'intégrité des autres camions peuvent être utilisées comme pondération des mesures GPS ou Galileo, de la même façon que le R.A.I.M. peut les corriger.

La figure 4 souligne aussi un autre aspect de l'invention relatif à la redondance ces informations, apportant une robustesse avantageuse au système global de pilotage du convoi. Selon un aspect de l'invention, la redondance des navigateurs embarqués dans chacun des véhicules, ou au moins dans une partie d'entre eux, permet d'améliorer la robustesse du système global. Par exemple, si un véhicule rencontre des problèmes avec son système de positionnement et/ou son système de communication avec les autres véhicules, lesdits autres véhicules ont la copie du dernier état du navigateur du véhicule défaillant et peuvent par suite prendre des mesures appropriées à la situation. Par exemple, au moyen d'une extrapolation de la trajectoire et de la vitesse du véhicule défaillant, la tête de convoi peut par exemple accélérer tandis que la fin de convois peut ralentir de manière à augmenter la distance intercalaire.

D'autres exemples de réaction sont possibles (arrêt sur la bande d'arrêt d'urgence, établissement de la communication au moyen d'autres canaux de secours, émission sonore et/ou lumineuses, etc). Les procédés et systèmes décrits visent à corriger les temps d'horloge. Dans un mode particulier de réalisation, cette correction peut être atteinte par redondance. Selon ce mode, chaque camion recalcule en permanence le temps et les positions de tous les autres véhicules. Si un véhicule est défaillant, les autres véhicules verront que ledit véhicule ne répond pas et une logique prédéfinie peut être mise en oeuvre (ralentissements, accélérations, etc), éventuellement en actionnant d'autres moyens (capteurs visuels ou de proximité, radars, etc). Une redondance systématique présente l'avantage de la standardisation, i.e. des économies d'échelle. Le même équipement est déployé dans tous les véhicules.

Dans un autre mode de réalisation, la redondance est partielle. En d'autres termes, certains véhicules dans le convoi possèdent des copies identiques (redondantes) de l'image du système global tandis que d'autres ne la détienne pas, ou seulement de manière partielle. Ces véhicules particuliers peuvent par exemple accompagner le convoi en vertu d'autres moyens (par exemple uniquement des moyens de détection radars ou par des détecteurs de proximité). Des mécanismes d'authentification ou d'autorisation des véhicules «au sein» du convoi peuvent être mis en oeuvre. Par exemple, des informations de version sur les systèmes embarqués, peuvent renseigner sur la compatibilité (ou l'incompatibilité) avec les méthodes ou systèmes présentement décrits.

En complément, il peut également être réalisé des mesures sur canal de communication entre camions non-successifs. Typiquement, les signaux transmis par le camion 1 peuvent non seulement servir de support de mesure au camion 2, mais également aux camions 3, 4, 5, etc. ; et de même ceux transmis par le camion 2 peuvent servir aux camions 1, 3, 4, 5, etc. Compte-tenu des effets de propagation, il est attendu que ces mesures perdent en précision avec l'éloignement, mais elles peuvent cependant constituer un complément utilisable pour éviter les dérives par accumulation d'erreur d'un camion à l'autre, notamment dans les courbes ou virages.

De manière initiale, le problème peut être résolu avec l'usage d'un système GPS différentiel couplé à un canal de communication. Cependant, cette solution peut malgré tout présenter des défauts d'intégrité résiduels (perturbation du signal G.N.S.S. au niveau global (panne satellite par exemple) ou au niveau local (multi-trajets par exemple). Pour une application aussi critique en termes de sécurité, il est donc avantageux d'hybrider le procédé décrit avec l'emploi d'autres senseurs (ou capteurs, par opposition à actuateurs).

Une classe de senseurs possibles correspond à celle des senseurs inertiels. Un senseur inertiel permet de remédier à certaines limitations du G.N.S.S. (passage sous un pont par exemple) mais il présente le défaut d'une dérive à moyen et long-terme relativement forte et surtout non prévisible (typiquement, les dérives des senseurs inertiels de chacun des camions du convoi pourront être différentes, ce qui signifie qu'en cas de localisation différentielle basée sur ces senseurs chacun va dériver de manière différente, ce qui peut conduire à des éloignements finaux entre le premier et le dernier camion supérieurs par exemple à la longueur de la file totale). Ce type de senseur ne permet pas un suivi des positions relatives des véhicules entre eux. Utilisés en complément des procédés et systèmes décrits, un ou plusieurs senseurs inertiels permettent d'améliorer la robustesse et la précision des positionnements des véhicules. Dans le cas où des mesures inertielles sont disponibles, elles rajoutent une troisième source d'information qui contribue aux analyses de cohérences et à la localisation des véhicules. Ces mesures peuvent être particulièrement utiles dans le cas d'indisponibilités G.N.S.S. de longue durée (tunnels par exemple).

D'autres types de senseurs peuvent également être utilisés en combinaison, par exemple des senseurs de type radar ou optique. La sensibilité de ces senseurs à la météo (pluie notamment) les rend difficile à utiliser comme solution en toutes conditions. Ils ont de plus un temps de réaction assez long (par rapport à du DGPS par exemple) et un coût équipement élevé. Enfin, ils demandent généralement une relative maîtrise de l'attitude, qui est assez difficile à mettre en oeuvre de manière concrète. Les techniques à base de radar permettent donc des améliorations complémentaires, mais qui reste généralement limitées et sont à l'heure actuelle associées à des coûts élevés.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

## Revendications

1. Procédé mis en oeuvre par ordinateur pour la gestion d'un convoi comprenant au moins deux véhicules, chacun des au moins deux véhicules comprenant des moyens de positionnement par satellite et des moyens de communication de véhicule à véhicule, le procédé comprenant la détermination du positionnement relatif desdits véhicules, ladite détermination comprenant la mesure du temps de propagation d'un signal entre véhicules par les moyens de communication, les horloges associées aux moyens de communication étant synchronisées par l'intermédiaire des moyens de positionnement par satellite en un temps d'horloge de référence, le procédé comprenant en outre la communication entre les véhicules de l'incertitude associée au temps d'horloge de référence et la communication entre les véhicules d'informations relatives aux rapports signal à bruit des mesures issues des moyens de positionnement par satellite.

2. Procédé selon la revendication 1, comprenant en outre la communication entre les véhicules d'informations relatives au rapport signal à bruit du signal de communication entre les véhicules formant le convoi.

3. Procédé selon les revendications 1 à 2, comprenant en outre la communication entre les véhicules d'informations relatives aux résidus de mesure sur les signaux reçus des moyens de positionnement par satellite.

4. Procédé selon l'une quelconque des revendications précédentes, comprenant en outre la détermination d'une localisation absolue d'un ou de plusieurs véhicules formant le convoi.

5. Procédé selon l'une quelconque des revendications précédentes, le positionnement relatif des véhicules étant corrigé des données reçus par un système d'augmentation régionale des moyens de positionnement par satellite.

6. Procédé selon l'une quelconque des revendications précédentes, les moyens de positionnement par satellite étant des moyens de positionnement par satellite fonctionnant en mode différentiel.

7. Procédé selon l'une quelconque des revendications précédentes, comprenant en outre la mesure de fréquence de réception du signal des moyens de communication, la mesure de fréquence permettant la détection de virages d'un ou de plusieurs véhicules.

8. Procédé selon la revendication précédente, comprenant en outre la calibration de la fréquence d'émission du signal des moyens de communication par les moyens de positionnement par satellite.

9. Procédé selon l'une quelconque des revendications précédentes, comprenant en outre la mesure de la puissance du signal reçue par un ou plusieurs des moyens de communication.

10. Procédé selon l'une quelconque des revendications précédentes, un ou plusieurs des véhicules formant le convoi ne comprenant pas lesdits moyens de communication et/ou lesdits moyens de positionnement.

11. Procédé selon l'une quelconque des revendications précédentes, un véhicule étant autorisé à rejoindre ou à quitter le convoi de véhicules.

12. Procédé selon l'une quelconque des revendications précédentes, une information de localisation absolue étant reçue d'une source fixe et authentifiée.

13. Procédé selon l'une quelconque des revendications précédentes, comprenant l'exclusion d'un satellite défaillant pour la détermination du positionnement d'un véhicule et/ou pour l'estimation du temps d'horloge de référence.

14. Produit programme d'ordinateur comprenant des instructions de code permettant d'effectuer les étapes du procédé selon l'une quelconque des revendications 1 à 13.

15. Système comprenant des moyens adaptés pour mettre en oeuvre les étapes du procédé selon l'une quelconque des revendications 1 à 15.

16. Système selon la revendication 15, les moyens de communication utilisant une modulation UWB.

## Patentansprüche

1. Verfahren, ausgeführt von einem Computer zum Steuern eines Konvois, der wenigstens zwei Fahrzeuge umfasst, wobei jedes der wenigstens zwei Fahrzeuge Satellitenortungsmittel und Kommunikationsmittel von Fahrzeug zu Fahrzeug umfasst, wobei das Verfahren das Bestimmen der relativen Positionierung der Fahrzeuge beinhaltet, wobei das Bestimmen das Messen der Ausbreitungszeit eines Signals zwischen Fahrzeugen durch die Kommunikationsmittel beinhaltet, wobei die mit den Kommunikationsmitteln assoziierten Taktgeber mittels der Satellitenortungsmittel auf eine Referenztaktzeit synchronisiert werden, wobei das Verfahren ferner das Kommunizieren, zwischen den Fahrzeugen, der mit der Referenztaktzeit assoziierten Unsicherheit und das Kommunizieren, zwischen den Fahrzeugen, von Informationen über die Signal-Rausch-Verhältnisse der Messwerte von den Satellitenortungsmitteln beinhaltet.

2. Verfahren nach Anspruch 1, das ferner das Kommunizieren, zwischen den Fahrzeugen, von Informationen über das Signal-Rausch-Verhältnis des Kommunikationssignals zwischen den den Konvoi bildenden Fahrzeugen beinhaltet.

3. Verfahren nach den Ansprüchen 1 bis 2, das ferner das Kommunizieren, zwischen den Fahrzeugen, von Informationen über die Messwertreste auf den von den Satellitenortungsmitteln empfangenen Signalen beinhaltet.

4. Verfahren nach einem der vorherigen Ansprüche, das ferner das Bestimmen eines absoluten Standorts von einem oder mehreren der den Konvoi bildenden Fahrzeuge beinhaltet.

5. Verfahren nach einem der vorherigen Ansprüche, wobei die relative Positionierung der Fahrzeuge mit Daten korrigiert wird, die von einem regionalen Erweiterungssystem der Satellitenortungsmittel empfangen werden.

6. Verfahren nach einem der vorherigen Ansprüche, wobei die Satellitenortungsmittel im Differenzialmodus arbeitende Satellitenortungsmittel sind.

7. Verfahren nach einem der vorherigen Ansprüche, das ferner das Messen der Empfangsfrequenz des Signals der Kommunikationsmittel beinhaltet, wobei das Messen der Frequenz das Erkennen des Abbiegens von einem oder mehreren Fahrzeugen ermöglicht.

8. Verfahren nach dem vorherigen Anspruch, das ferner das Kalibrieren der Sendefrequenz des Signals der Kommunikationsmittel durch die Satellitenortungsmittel beinhaltet.

9. Verfahren nach einem der vorherigen Ansprüche, das ferner das Messen der Leistung des durch ein oder mehrere der Kommunikationsmittel empfangenen Signals beinhaltet.

10. Verfahren nach einem der vorherigen Ansprüche, wobei ein oder mehrere der den Konvoi bildenden Fahrzeuge keine Kommunikationsmittel und/oder keine Ortungsmittel umfassen.

11. Verfahren nach einem der vorherigen Ansprüche, wobei ein Fahrzeug autorisiert ist, sich dem Konvoi von Fahrzeugen anzuschließen oder ihn zu verlassen.

12. Verfahren nach einem der vorherigen Ansprüche, wobei eine absolute Standortinformation von einer festen und authentisierten Quelle empfangen wird.

13. Verfahren nach einem der vorherigen Ansprüche, das den Ausschluss eines fehlerhaften Satelliten zum Bestimmen der Positionierung eines Fahrzeugs und/oder zum Schätzen der Referenztaktzeit beinhaltet.

14. Computerprogrammprodukt, das Code-Befehle umfasst, die das Ausführen der Schritte des Verfahrens nach einem der Ansprüche 1 bis 13 ermöglichen.

15. System, das Mittel umfasst, ausgelegt zum Ausführen der Schritte des Verfahrens nach einem der Ansprüche 1 bis 15.

16. System nach Anspruch 15, wobei die Kommunikationsmittel eine UWB-Modulation benutzen.

## Claims

1. Method implemented by computer for the management of a convoy comprising at least two vehicles, each of the at least two vehicles comprising satellite positioning means and vehicle-to-vehicle communication means, the method comprising the determination of the relative positioning of said vehicles, said determination comprising the measurement of the propagation time of a signal between vehicles by the communication means, the clocks associated with the communication means being synchronised via the satellite positioning means at a reference clock time, the method further comprising the communication between the vehicles of the uncertainty associated with the reference clock time and the communication between the vehicles of information relating to the signal-to-noise ratios of the measurements from the satellite positioning means.

2. Method according to claim 1, further comprising the communication between the vehicles of information relating to the signal-to-noise ratio of the communication signal between the vehicles forming the convoy.

3. Method according to claims 1 to 2, further comprising the communication between the vehicles of information relating to the measurement residuals on the signals received from the satellite positioning means.

4. Method according to any one of the preceding claims, further comprising the determination of an absolute location of one or more vehicles forming the convoy.

5. Method according to any one of the preceding claims, the relative positioning of the vehicles being corrected in terms of the data received by a regional augmentation system of the satellite positioning means.

6. Method according to any one of the preceding claims, the satellite positioning means being satellite positioning means operating in differential mode.

7. Method according to any one of the preceding claims, further comprising the measurement of the reception frequency of the signal of the communication means, the frequency measurement making it possible to detect turns of one or more vehicles.

8. Method according to the preceding claim, further comprising the calibration of the transmission frequency of the signal of the communication means by the satellite positioning means.

9. Method according to any one of the preceding claims, further comprising the measurement of the power of the signal received by one or more of the communication means.

10. Method according to any one of the preceding claims, one or more of the vehicles forming the convoy not comprising said communication means and/or said positioning means.

11. Method according to any one of the preceding claims, a vehicle being authorised to join or leave the convoy of vehicles.

12. Method according to any one of the preceding claims, an absolute location information item being received from a fixed and authenticated source.

13. Method according to any one of the preceding claims, comprising the exclusion of a failing satellite for the determination of the positioning of a vehicle and/or for the estimation of the reference clock time.

14. Computer programme product comprising code instructions which enable the steps of the method according to any one of claims 1 to 13 to be implemented.

15. System comprising means suitable for implementing the steps of the method according to any one of claims 1 to 15.

16. System according to claim 15, the communication means using a UWB modulation.
